# EUROPEAN PATENT APPLICATION

(11) **EP 3 136 756 A1**
(43) Date of publication of application: **01.03.2017**
(21) Application number: 14893349.2
(22) Date of filing: 02.12.2014
(51) Int. Cl.: H04W 4/00

(54) **SYSTEM, DEVICE AND METHOD FOR IMPLEMENTING RING BACK TONE SERVICE**

(30) Priority: 26.05.2014 CN 201410226502
(71) Applicant: ZTE Corporation, Shenzhen, Guangdong 518057 (CN)
(72) Inventor: GUAN, Chun, Shenzhen Guangdong 518057 (CN); ZHU, Guangliang, Shenzhen Guangdong 518057 (CN); HA, Jingnan, Shenzhen Guangdong 518057 (CN)
(74) Representative: Awapatent AB
(86) International application number: PCT/CN2014/092831
(87) International publication number: WO 2015/180442

(57) **Abstract**

The embodiments of the present invention disclose a system, a device and a method for implementing a ring back tone service, herein, the system for implementing the ring back tone service includes: a first server and a second server, herein, the first server is arranged to respond to a call from a calling party terminal and connect with a called party terminal, and trigger the second server to play a ring back tone for the calling party terminal; and the second server is arranged to respond to the trigger of the first server and play the ring back tone for the calling party terminal. Through the embodiments of the present invention, the security of the ring back tone service is improved and the network deployment cost is reduced.

## Description

### Technical Field

The present invention relates to the field of communication, in particular to a system, a device and a method for implementing a ring back tone service.

### Background

With the application of an IP Multimedia Subsystem (IMS) and the popularization of intelligent terminals, the broadband ring back tone service is also widely applied. However, the current IMS core network user service subscription is implemented through Home Subscriber Server (HSS) subscription templates, in other words, each Application Server (AS) is responsible for a call connection process from a calling party terminal to a called party terminal once, i.e., a ring back tone AS based on an IMS network is also responsible for functions such as call connection and call forwarding in addition to a function of tone playing.

In the above-mentioned solution, when the ring back tone AS fails, the problem that the call cannot be connected will be caused, i.e., "single-point failure" in the network will be caused. In order to improve the security, stability and disaster tolerance processing capability of the system, mostly a plurality of ring back tone AS nodes are introduced into the current network to implement redundancy, this redundancy solution will increase the investment of the operator.

To view from the deployment, the implementation of the above-mentioned solution is complex. For example, under the situation that the calling party terminal subscribes a calling party ring back tone service and the called party terminal subscribes a called party ring back tone service, in the above-mentioned solution, addresses of a calling party ring back tone AS and a called party ring back tone AS need to be respectively deployed at interfaces of an IMS core network call control node and a ring back tone service, and it is comparatively complex in the implementation of the solution.

With respect to the problems that the implementation of the ring back tone service is complex and the security is not high in the related art, currently an effective solution has not been put forward yet.

### Summary of the Invention

Aiming at the problems that the implementation of a ring back tone service is complex and the security is not high in the prior art, the embodiments of the present invention provide a system, a device and a method for implementing a ring back tone service, so as to at least solve the problems.

According to one embodiment of the present invention, the present invention provides a system for implementing a ring back tone service, including: a first server and a second server, herein, the first server is arranged to respond to a call from a calling party terminal and connect with a called party terminal, and trigger the second server to play a ring back tone for the calling party terminal; and the second server is arranged to respond to the trigger of the first server and play the ring back tone for the calling party terminal.

The played ring back tone includes: a calling party ring back tone preset at the calling party terminal and a called party ring back tone preset at the called party terminal; and the first server is further arranged to determine whether to play the calling party ring back tone or the called party ring back tone for the calling party terminal according to a preset rule, and indicate the ring back tone determined to be played when the second server is triggered to play the ring back tone for the called party terminal; or the second server is further arranged to determine whether to play the calling party ring back tone or the called party ring back tone for the calling party terminal according to the preset rule.

The preset rule includes: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

According to another embodiment of the present invention, the present invention provides a first server, including: a communication interface arranged to communicate with an IP multimedia subsystem and a second server, herein, the second server is arranged to play a tone for a terminal; a first processor arranged to respond to a call from a calling party terminal and connect with a called party terminal; and a second processor arranged to trigger the second server to play a ring back tone for the calling party terminal.

The second processor is further arranged to determine whether to play a calling party ring back tone or a called party ring back tone for the calling party terminal according to a preset rule, and indicate the ring back tone determined to be played when the second server is triggered to play the ring back tone for the called party terminal, herein, the calling party ring back tone is a ring back tone preset at the calling party terminal and the called party ring back tone is a ring back tone preset at the called party terminal.

The preset rule includes: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

According to another embodiment of the present invention, the present invention provides a method for implementing a ring back tone service, including: a first server responding to a call from a calling party terminal and connecting with a called party terminal; and the first server triggering a second server to play a ring back tone for the calling party terminal, herein, the second server is arranged to respond to the trigger of the first server and play the ring back tone for the calling party terminal.

The method further includes: the first server determining whether to play a calling party ring back tone or a called party ring back tone for the calling party terminal according to a preset rule, herein, the calling party ring back tone is a ring back tone preset at the calling party terminal and the called party ring back tone is a ring back tone preset at the called party terminal; and the first server indicating the ring back tone determined to be played when the second server is triggered to play the ring back tone for the called party terminal.

The preset rule includes: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

The first server responding to the call from the calling party terminal and connecting with the called party terminal includes: the first server responding to the call initiated by the calling party terminal through an IP multimedia subsystem and connecting with the called party terminal through the IP multimedia subsystem.

Before triggering the second server to play the ring back tone for the calling party terminal, the method further includes: the first server determining whether to play the ring back tone; and when determining to play the ring back tone, the first server triggering the second server to play the ring back tone for the calling party terminal.

The first server determining whether to play the ring back tone includes: the first server receiving a first message transmitted by the called party terminal, herein, the first message is arranged to indicate a state of the called party terminal; and when the first message indicates that the called party terminal is in an idle state, the first server determining to play the ring back tone.

The first server triggering the second server to play the ring back tone for the calling party terminal includes: the first server initiating a call request to the second server, herein, the call request carries information of the calling party terminal.

According to another embodiment of the present invention, the present invention provides a device for implementing a ring back tone service, located at a first server, including: a connection module arranged to respond to a call from a calling party terminal and connect with a called party terminal; and a trigger module arranged to trigger a second server to play a ring back tone for the calling party terminal, herein, the second server is arranged to respond to the trigger of the first server and play the ring back tone for the calling party terminal.

The device further includes a first determination module, further arranged to determine whether to play a calling party ring back tone or a called party ring back tone for the calling party terminal according to a preset rule, herein, the calling party ring back tone is a ring back tone preset at the calling party terminal and the called party ring back tone is a ring back tone preset at the called party terminal; and the trigger module is further arranged to indicate the ring back tone determined to be played when the second server is triggered to play the ring back tone for the called party terminal.

The preset rule includes: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

The connection module is arranged to respond to the call initiated by the calling party terminal through an IP multimedia subsystem and connect with the called party terminal through the IP multimedia subsystem.

The device further includes: a second determination module arranged to determine whether to play the ring back tone.

The second determination module includes: a receiving unit arranged to receive a first message transmitted by the called party terminal, herein, the first message is arranged to indicate a state of the called party terminal; and a determination unit arranged to, when the first message indicates that the called party terminal is in an idle state, determine to play the ring back tone.

The trigger module is arranged to initiate a call request to the second server, herein, the call request carries information of the calling party terminal.

Through the embodiments of the present invention, the first server is arranged to respond to the call from the calling party terminal and connect with the called party terminal, and trigger the second server to play the ring back tone for the calling party terminal; and the second server is arranged to respond to the trigger of the first server and play the ring back tone for the calling party terminal. Thereby, calling and ring back tone playing are separated, the single-point failure can be effectively avoided and the security of the ring back tone service is improved.

### Brief Description of Drawings

The drawings described here are used for providing further understanding about the present invention and constitute a part of the present application. The exemplary embodiments and description thereof of the present invention are used for explaining the present invention instead of improperly limiting the present invention. Among the drawings:
FIG. 1 is a schematic diagram of a system for implementing a ring back tone service according to an embodiment of the present invention;
FIG. 2 is a structural diagram of a first server according to an embodiment of the present invention;
FIG. 3 is a flowchart of a method for implementing a ring back tone service according to an embodiment of the present invention;
FIG. 4 is a structural diagram of a device for implementing a ring back tone service according to an embodiment of the present invention;
FIG. 5 is a schematic diagram of a preferred system for implementing a ring back tone service according to an embodiment of the present invention;
FIG. 6 is a flowchart of called party double-call AS call signaling according to an embodiment of the present invention;
FIG. 7 is a flowchart of calling party double-call AS call signaling according to an embodiment of the present invention; and
FIG. 8 is a flowchart of signaling of double-call AS call tone playing when a calling party ring back tone and a called party ring back tone coexist according to an embodiment of the present invention.

### Preferred Embodiments of the Invention

The present invention will be described below in detail with reference to the drawings in combination with the embodiments. It needs to be stated that the embodiments in the present application and the features in the embodiments may be mutually combined under the situation of no conflict.

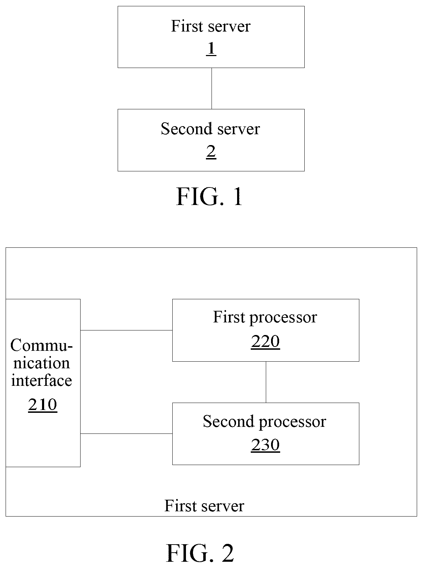

FIG. 1 is a schematic diagram of a system for implementing a ring back tone service according to the embodiment of the present invention. As illustrated in FIG. 1, the system mainly includes: a first server 1 and a second server 2, wherein, the first server 1 is arranged to respond to a call from a calling party terminal and connect with a called party terminal, and trigger the second server 2 to play a ring back tone for the calling party terminal; and the second server 2 is arranged to respond to the trigger of the first server 1 and play the ring back tone for the calling party terminal.

Through the embodiment of the present invention, the first server is arranged to respond to the call from the calling party terminal and connect with the called party terminal; and trigger the second server to play the ring back tone for the calling party terminal; and the second server is arranged to respond to the trigger of the first server and play the ring back tone for the calling party terminal. Thereby, calling and ring back tone playing are separated, the single-point failure can be effectively avoided and the security of the ring back tone service is improved. In addition, during network deployment, the first server only needs to be redundant and the network deployment cost is reduced.

In one implementation mode of the embodiment of the present invention, the first server 1 may also determine whether to play the ring back tone, and when determining to play the ring back tone, the second server 2 is triggered to play the ring back tone for the calling party terminal.

In the related art, a called party ring back tone AS and a calling party ring back tone AS need to be simultaneously triggered, the ring back tone which needs to be played is one of the calling party ring back tone or the called party ring back tone, and this causes the waste of occupying the tone playing resources on one side. In one preferred implementation mode of the embodiment of the present invention, the played ring back tone includes: a calling party ring back tone preset at the calling party terminal and a called party ring back tone preset at the called party terminal; and the first server 1 is further arranged to determine whether to play the calling party ring back tone or the called party ring back tone for the calling party terminal according to a preset rule, and indicate the ring back tone determined to be played when the second server is triggered to play the ring back tone for the called party terminal. Alternatively, the ring back tone which needs to be played may also be determined by the second server, and the second server 2 is further arranged to determine whether to play the calling party ring back tone or the called party ring back tone for the calling party terminal according to the preset rule.

In one preferred implementation mode of the embodiment of the present invention, the preset rule may includes: a priority of the calling party ring back tone and a priority of the called party ring back tone, herein, when the priority of the calling party ring back tone is higher than the priority of the called party ring back tone, the calling party ring back tone may be played for the calling party terminal; and when the priority of the called party ring back tone is higher than the priority of the called party ring back tone, the called party ring back tone may be played for the calling party terminal. Of course, the embodiment of the present invention is not limited thereto.

FIG. 2 is a structural diagram of a first server according to the embodiment of the present invention. As illustrated in FIG. 2, the first server may include: a communication interface 210, a first processor 220 and a second processor 230. Herein the communication interface 210, the first processor 220 and the second processor 230 are mutually connected. Herein, the communication interface 210 is arranged to communicate with an IP multimedia subsystem and a second server, herein, the second server is arranged to play a tone for a terminal; the first processor 220 is arranged to respond to a call from a calling party terminal and connect with a called party terminal; and the second processor 230 is arranged to trigger the second server to play a ring back tone for the calling party terminal.

In one implementation of the embodiment of the present invention, the second processor 230 may also determine whether to play the ring back tone, and when determining to play the ring back tone, the second server is triggered to play the ring back tone for the calling party terminal.

In the related art, a called party ring back tone AS and a calling party ring back tone AS need to be simultaneously triggered, the ring back tone which needs to be played is one of the calling party ring back tone or the called party ring back tone, and this causes the waste of occupying the tone playing resources on one side. In one preferred implementation mode of the embodiment of the present invention, the second processor 230 is further arranged to determine whether to play a calling party ring back tone or a called party ring back tone for the calling party terminal according to a preset rule, and indicate the ring back tone determined to be played when the second server is triggered to play the ring back tone for the called party terminal, herein, the calling party ring back tone is a ring back tone preset at the calling party terminal and the called party ring back tone is a ring back tone preset at the called party terminal.

In one preferred implementation mode of the embodiment of the present invention, the preset rule may include: a priority of the calling party ring back tone and a priority of the called party ring back tone. Herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

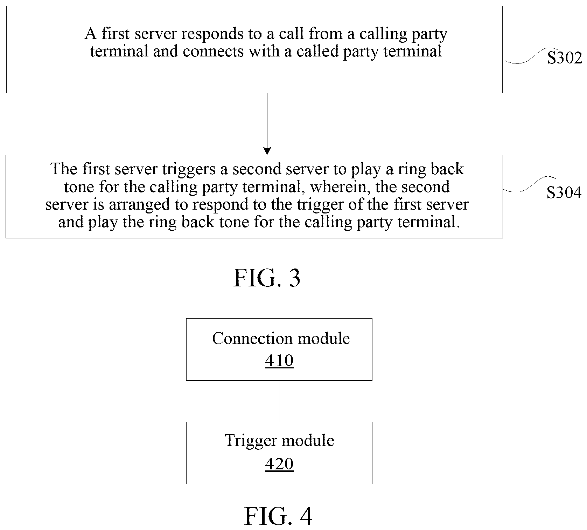

FIG. 3 is a flowchart of a method for implementing a ring back tone service according to the embodiment of the present invention, as illustrated in FIG. 3, the method mainly includes steps S302 to step S304.

In step S302, a first server responds to a call from a calling party terminal and connects with a called party terminal.

In step S304, the first server triggers a second server to play a ring back tone for the calling party terminal, herein, the second server is arranged to respond to the trigger of the first server and play the ring back tone for the calling party terminal.

In the related art, a called party ring back tone AS and a calling party ring back tone AS need to be simultaneously triggered, the ring back tone which needs to be played is one of the calling party ring back tone or the called party ring back tone, and this causes the waste of occupying the tone playing resources on one side. In one preferred implementation mode of the embodiment of the present invention, the method may further include: the first server determining whether to play a calling party ring back tone or a called party ring back tone for the calling party terminal according to a preset rule, herein, the calling party ring back tone is a ring back tone preset at the calling party terminal and the called party ring back tone is a ring back tone preset at the called party terminal; and the first server indicating the ring back tone determined to be played when the second server is triggered to play the ring back tone for the called party terminal.

In one preferred implementation mode of the embodiment of the present invention, the preset rule may include: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

In one implementation mode of the embodiment of the present invention, in step S302, the first server may respond to the call initiated by the calling party terminal through an IP multimedia subsystem and connect the called party terminal through the IP multimedia subsystem.

In one implementation mode of the embodiment of the present invention, the first server may also determine whether to play the ring back tone.

In one preferred implementation mode of the embodiment of the present invention, the first server may receive a first message transmitted by the called party terminal, herein, the first message is arranged to indicate a state of the called party terminal; and when the first message indicates that the called party terminal is in an idle state, the first server determines to play the ring back tone.

In one implementation mode of the embodiment of the present invention, in step S306, the first server may initiate a call request to the second server, herein, the call request carries information of the calling party terminal.

FIG. 4 is a structural diagram of a device for implementing a ring back tone service according to the embodiment of the present invention, the device is located at a first server and the device may include: a connection module 410 and a trigger module 420. Herein, the connection module 410 is arranged to respond to a call from a calling party terminal and connect with a called party terminal; and the trigger module 420 is connected with the connection module 410 and is arranged to trigger a second server to play a ring back tone for the calling party terminal, herein, the second server is arranged to respond to the trigger of the first server and play the ring back tone for the calling party terminal.

In the related art, a called party ring back tone AS and a calling party ring back tone AS need to be simultaneously triggered, the ring back tone which needs to be played must be one of the calling party ring back tone or the called party ring back tone, and this causes the waste of occupying the tone playing resources on one side. In one preferred implementation mode of the embodiment of the present invention, the device may further include a first determination module arranged to determine whether to play a calling party ring back tone or a called party ring back tone for the calling party terminal according to a preset rule, herein, the calling party ring back tone is a ring back tone preset at the calling party terminal and the called party ring back tone is a ring back tone preset at the called party terminal; and the trigger module 420 is further arranged to indicate the ring back tone determined to be played when the second server is triggered to play the ring back tone for the called party terminal.

In one preferred implementation mode of the embodiment of the present invention, the preset rule may include: a priority of the calling party ring back tone and a priority of the called party ring back tone, herein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

In one preferred implementation mode of the embodiment of the present invention, the connection module 410 is arranged to respond to the call initiated by the calling party terminal through the IP multimedia subsystem and connect with the called party terminal through an IP multimedia subsystem.

In one preferred implementation mode of the embodiment of the present invention, the device may further include a second determination module arranged to determine whether to play the ring back tone.

In one implementation mode of the embodiment of the present invention, the second determination module may include: a receiving unit arranged to receive a first message transmitted by the called party terminal, herein, the first message is arranged to indicate a state of the called party terminal; and a determination unit arranged to, when the first message indicates that the called party terminal is in an idle state, determine to play the ring back tone.

In one preferred implementation mode of the embodiment of the present invention, the trigger module may be arranged to initiate a call request to the second server, herein, the call request carries information of the calling party terminal.

It can be expected that the method and device may be implemented through computer program units.

The preferred implementation mode of the embodiment of the present invention will be described below.

In the preferred implementation mode, a ring back tone AS is decomposed into a ring back tone playing AS (equivalent to the second server) an a ring back tone double-call AS (equivalent to the first server), herein, the ring back tone playing AS is only responsible for a tone playing function and the ring back tone double-call AS is responsible for call related functions such as call connection and call forwarding. Aiming at the problem of network single-point failure, the ring back tone double-call AS only needs to be redundant, and on the premise that the security of the system is guaranteed, the investment waste of the operator is greatly reduced and the expense of the operator is reduced.

A double-call AS only needs to be deployed at an interface of a core network control node. Simultaneously, in a service triggering mode, a called party ring back tone AS and a calling party ring back tone AS need to be simultaneously triggered in the related art, and this will cause the waste of occupying the tone playing resources on a called party side. However, in the present preferred implementation mode, the double-call AS only needs to trigger the called party tone playing AS or the calling party tone playing AS according to priorities, and the tone playing resources are greatly saved.

The ring back tone double-call AS may be used as the called party double-call AS and the calling party double-call AS.

A method for implementing the calling party double-call AS includes: a calling party terminal initiates a call to a called party terminal, a Serving Call Session Control Function (SCSCF) on a calling party side evaluates that a calling party user has subscribed a calling party ring back tone service through an initial filtration criterion, then the call is transmitted to the calling party double-call AS, and an outgoing call of the calling party double-call AS passes through a core network on a called party side and the like and reaches the called party terminal. The called party terminal rings, a ring tone message reaches the calling party double-call AS and then the calling party double-call AS initiates a call to the tone playing AS. After the tone playing AS obtains ring back tone information of the calling party user, the tone playing AS establishes a connection with a media server to obtain a negotiated ring back tone Session Description Protocol (SDP), the ring back tone SDP is transmitted to the calling party terminal through the ring tone message, the negotiation between the calling party terminal and the media server is ended, and the tone playing AS starts to play a calling party ring back tone for the calling party. When the called party answers, the calling party double-call AS transmits a cancel message to the tone playing AS, the tone playing AS interrupts the connection with the media server, the calling party ring back tone playing is stopped, the calling party double-call AS re-initiates a negotiation between the calling party media and the called party media and a session process is established.

A method for implementing the called party double-call AS includes: a calling party terminal initiates a call to a called party terminal, an SCSCF on a called party side evaluates that a called party user has subscribed a called party ring back tone service through an initial filtration criterion, then the call is transmitted to the called party double-call AS, and an outgoing call of the called party double-call AS reaches the called party terminal. The called party terminal rings, a ring tone message reaches the called party double-call AS and then the called party double-call AS initiates a call to the tone playing AS. After the tone playing AS obtains ring back tone information of the called party user, the tone playing AS establishes a connection with a media server to obtain a negotiated called party ring back tone SDP, the called party ring back tone SDP is transmitted to the calling party terminal through the ring tone message, and the tone playing AS starts to play a called party ring back tone for the calling party. When the called party answers, the called party double-call AS transmits a cancel message to the tone playing AS, the tone playing AS interrupts the connection with the media server, the ring back tone playing is stopped, the called party double-call AS re-initiates a negotiation between the calling party media and the called party media and a session process is established.

In this preferred implementation mode, a calling party double-call AS (or called party double-call AS) implements a ring back tone service through the following steps:
In step A, a calling party double-call AS (or called party double-call AS) receives a call initiated by a core network SCSCF and forwards the call to a core network.
In step B, when a called party terminal is in an idle state, the called party terminal starts to ring and transmits a ring tone message to the calling party double-call AS (or called party double-call AS).
In step C, after the calling party double-call AS (or called party double-call AS) receives the ring tone message, a new call is initiated to a tone playing AS.
In step D, the tone playing AS queries a database to obtain ring back tone information of a called party user, and carries SDP information negotiated by the calling party terminal and a media server to the calling party double-call AS (or called party double-call AS) through the ring tone message, the calling party double-call AS (or called party double-call AS) transparently transmits the ring tone message to the calling party side, the negotiation between the calling party and the tone playing AS is ended and the tone playing AS plays the ring back tone for the calling party.
In step E, the called party answers, the calling party double-call AS (or called party double-call AS) transmits a cancel message to the tone playing AS, the tone playing AS stops playing the ring back tone, the calling party double-call AS (or called party double-call AS) re-initiates a negotiation between the calling party media and the called party media, and the calling and called parties start to have a conversation.

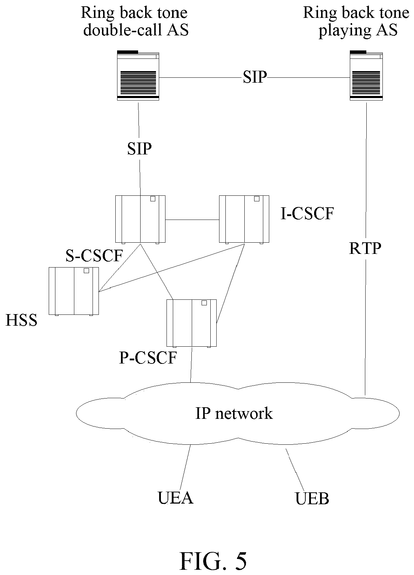

FIG. 5 is a schematic diagram of a system for implementing a ring back tone service according to the preferred embodiment of the present invention. As illustrated in FIG. 5, herein, UEA and UEB respectively represent a calling party terminal and a called party terminal; Proxy-CSCF (P-CSCF), Interrogating CSCF (I-CSCF) and S-CSCF are call/session control function nodes of an IMS network, and HSS records registration and service subscription information of users. Ring back tone double-call AS and ring back tone playing AS represent application servers of ring back tones. Therein, the calling party terminal and the called party terminal are registered to the IMS core network, the call/session control nodes of the IMS interact through a Session Initiation Protocol (SIP), the ring back tone double-call AS respectively interacts with the S-CSCF and the ring back tone playing AS through SIP messages, and after the ring back tone playing AS service is triggered, a ring back tone audio stream (RTP) is played to the calling party terminal.

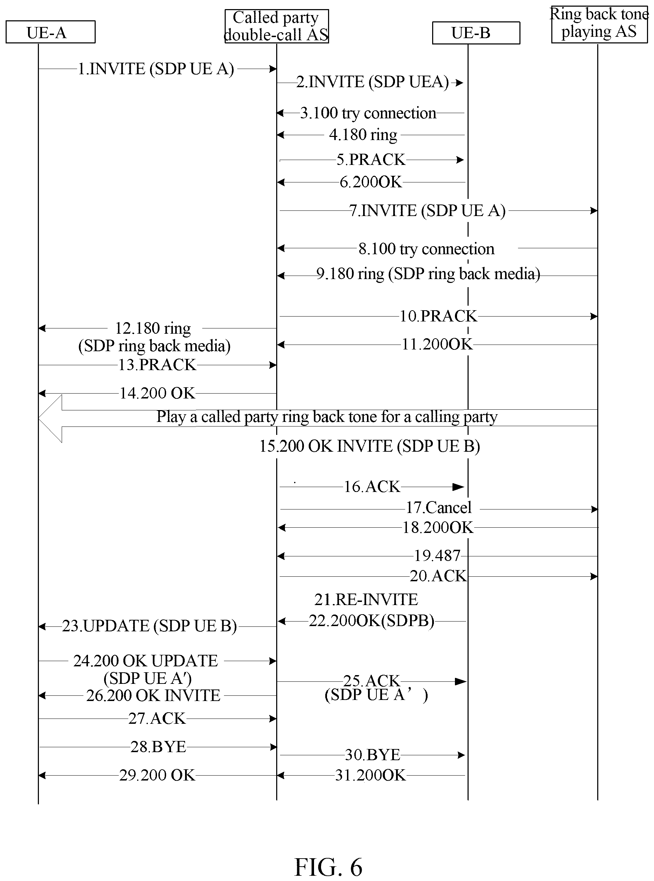

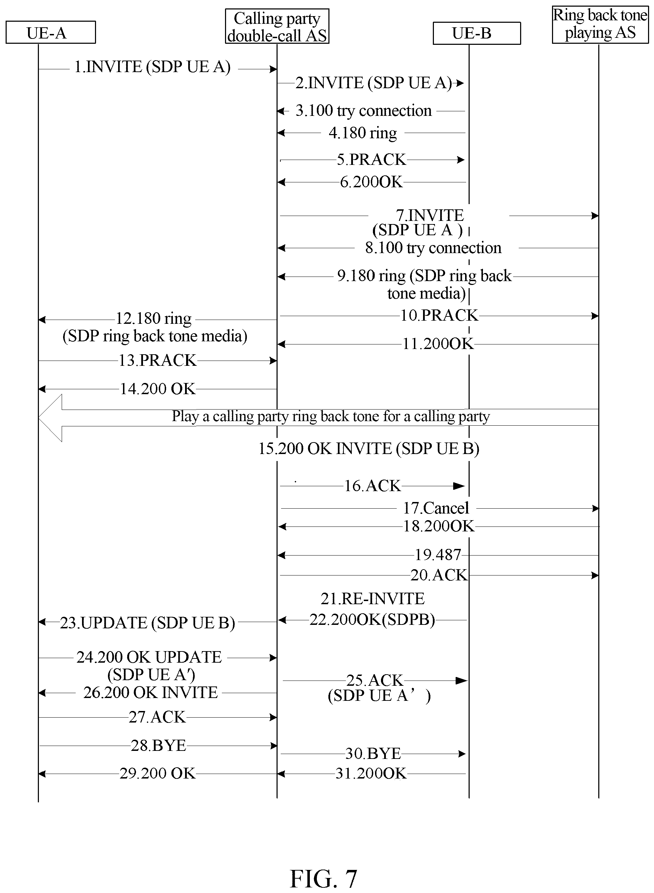

FIG. 6 is a flowchart of called party double-call AS call signaling according to the embodiment of the present invention and FIG. 7 is a flowchart of calling party double-call AS call signaling according to the embodiment of the present invention, herein, signaling interaction between core networks is omitted, and herein, FIG. 7 is basically the same as FIG. 6 and is not repetitively described. As illustrated in FIG. 6, the method includes:
In steps 1-3, a calling party terminal UEA initiates a call which passes through a core network and reaches a called party double-call AS, and an outgoing call of the called party double-call AS passes through a core network and reaches UEB.
In steps 4-6, when the called party terminal is in an idle state, a 180 message is transmitted to the called party double-call AS, the called party double-call AS transmits a 180 PRACK response to a called party side, and subsequently a 200 PRACK message of the called party side is received.
In steps 7-11, the called party double-call AS initiates a new call to a ring back tone playing AS, herein, an INVITE message carries SDP information of a calling party side. The ring back tone playing AS returns a 180 response, herein, a 180 message carries ring back tone SDP information negotiated with a calling party, the called party double-call AS transmits a 180 PRACK response to the tone playing AS, and subsequently a 200 PRACK message of the tone playing AS is received.
In steps 12-14, the called party double-call AS carries the SDP message of the tone playing AS to the calling party terminal through the 180 message, the calling party terminal knows a called party ring tone, and the tone playing AS starts to play the ring back tone for the calling party terminal.
In steps 15-16, the called party double-call AS receives a 200 answer message returned by the called party, and the called party double-call AS returns an ACK response.
In steps 17-20, the called party double-call AS transmits a CANCEL message to the ring back tone playing AS, and the tone playing AS stops playing the ring back tone.
In steps 21-27, the called party double-call AS transmits an empty REINVITE message to the called party side, and the called party terminal returns a 200 response message, herein the message carries SDP information of the called party. The called party double-call AS updates the SDP of the called party to the calling party side through an UPDATE message, the calling party terminal returns the negotiated SDP message to the called party double-call AS through a 200 UPDATE message, the called party double-call AS updates the negotiated SDP to the called party terminal through an ACK message, and the negotiation between the calling party and called party is ended. The called party double-call AS informs the calling party of that the called party has already answered, and the calling party and called party start a phone call.
In step 28-31, the calling party hangs up and transmits a BYE message to the called party double-call AS, the called party double-call AS transmits the BYE message to the called party terminal and the conversion between the calling party and called party is ended.

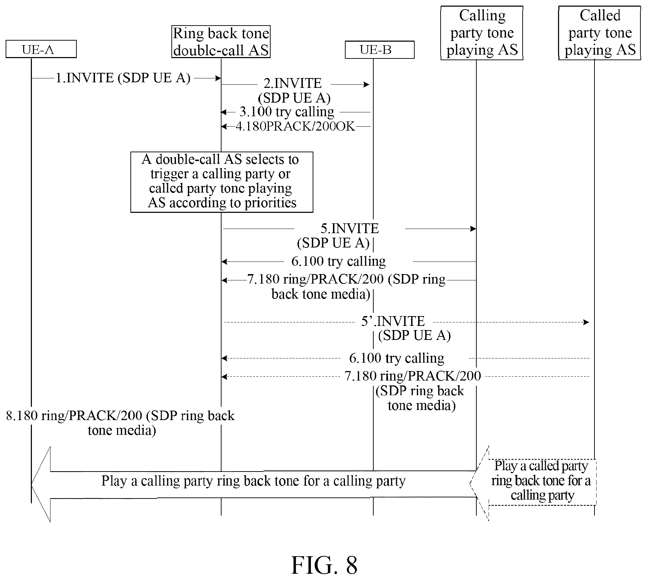

FIG. 8 is a flowchart of signaling of double-call AS call tone playing when a calling party ring back tone and a called party ring back tone coexist according to the embodiment of the present invention. As illustrated in FIG. 8, the method includes:
in steps 1-4, a calling party terminal UEA initiates a call which passes through a core network and reaches a ring back tone double-call AS, and an outgoing call of the ring back tone double-call AS passes through a core network to UEB. When a called party is in an idle state, a 180 message is transmitted to a called party double-call AS, the called party double-call AS transmits a 180 PRACK response to a called party side, and subsequently a 200 PRACK message of a called party side is received.
In steps 5-7, the double-call AS selects to perform call triggering to a calling party tone playing AS or a called party tone playing AS according to priorities of a called party ring back tone and a calling party ring back tone (herein, a solid line in the figure represents that the priority of the calling party ring back tone is higher, and if the priority of the called party ring back tone is higher, a flow illustrated by a dashed line is adopted), and ring back tone media information negotiated with the calling party terminal is obtained through a 180 message.
In step 8, the double-call AS transmits the ring back tone media information carried in the 180 message to the calling party terminal through the core network, and the tone playing AS starts to play the ring back tone for the calling party terminal.

According to the description above, it can be seen that the embodiments of the present invention realize the following technical effects: the ring back tone double-call AS only needs to be redundant, and on the premise that the security of the system is guaranteed, the investment waste of the operator is greatly reduced and the expense of the operator is reduced. The double-call AS only needs to be deployed at the interface of the core network control node. Simultaneously, in the service triggering mode, the called party ring back tone AS and the calling party ring back tone AS need to be simultaneously triggered in the related art, and this will cause the waste of occupying the tone playing resources on the called party side. However, in the embodiments of the present invention, the double-call AS only needs to trigger the called party tone playing AS or the calling party tone playing AS according to priorities, and the tone playing resources are greatly saved.

Obviously, one skilled in the art should understand that all components and all steps of the present invention may be implemented by using general-purpose computing devices, they may be integrated in a single computing device or distributed on a network consisting of a plurality of computing devices, optionally, they may be implemented by using program codes executable by computing devices, thus they may be stored in memory devices and executed by computing devices, and under certain circumstances, the illustrated or described steps may be executed according to a sequence different from the sequence here, or they may be respectively manufactured into each integrated circuit module or a plurality of modules or steps thereof may be manufactured into a single integrated circuit module to implement. Therefore, the present invention is not limited to any specific combination of hardware and software.

The embodiments described above are just preferred embodiments of the present invention and are not used for limiting the present invention. For one skilled in the art, the present invention may have various modifications and variations. Any modification, equivalent replacement, improvement and the like made within the essence and principle of the present invention shall be still included in the protection scope of the present invention.

### Industrial Applicability

As described above, the system, device and method for implementing the ring back tone service provided by the embodiments of the present invention have the following beneficial effects: calling and ring back tone playing are separated, the single-point failure can be effectively avoided and the security of the ring back tone service is improved.

## Claims

1. A system for implementing a ring back tone service, comprising: a first server and a second server, wherein,
the first server is arranged to respond to a call from a calling party terminal and connect with a called party terminal, and trigger the second server to play a ring back tone for the calling party terminal;
the second server is arranged to respond to the trigger of the first server and play the ring back tone for the calling party terminal.

2. The system according to claim 1, wherein the played ring back tone comprises: a calling party ring back tone preset at the calling party terminal and a called party ring back tone preset at the called party terminal;
the first server is further arranged to determine whether to play the calling party ring back tone or the called party ring back tone for the calling party terminal according to a preset rule, and indicate the ring back tone determined to be played when the second server is triggered to play the ring back tone for the called party terminal; or
the second server is further arranged to determine whether to play the calling party ring back tone or the called party ring back tone for the calling party terminal according to the preset rule.

3. The system according to claim 2, wherein, the preset rule comprises: a priority of the calling party ring back tone and a priority of the called party ring back tone, wherein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

4. A first server, comprising:
a communication interface arranged to communicate with an IP multimedia subsystem and a second server, wherein, the second server is arranged to play a tone for a terminal;
a first processor arranged to respond to a call from a calling party terminal and connect with a called party terminal; and
a second processor arranged to trigger the second server to play a ring back tone for the calling party terminal.

5. The first server according to claim 4, wherein, the second processor is further arranged to determine whether to play a calling party ring back tone or a called party ring back tone for the calling party terminal according to a preset rule, and indicate the ring back tone determined to be played when the second server is triggered to play the ring back tone for the called party terminal, wherein, the calling party ring back tone is a ring back tone preset at the calling party terminal and the called party ring back tone is a ring back tone preset at the called party terminal.

6. The first server according to claim 5, wherein, the preset rule comprises: a priority of the calling party ring back tone and a priority of the called party ring back tone, wherein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

7. A method for implementing a ring back tone service, comprising:
A first server responding to a call from a calling party terminal and connecting with a called party terminal; and
the first server triggering a second server to play a ring back tone for the calling party terminal, wherein, the second server is arranged to respond to the trigger of the first server and play the ring back tone for the calling party terminal.

8. The method according to claim 7, wherein, the method further comprises:
the first server determining whether to play a calling party ring back tone or a called party ring back tone for the calling party terminal according to a preset rule, wherein, the calling party ring back tone is a ring back tone preset at the calling party terminal and the called party ring back tone is a ring back tone preset at the called party terminal; and
the first server indicating the ring back tone determined to be played when the second server is triggered to play the ring back tone for the called party terminal.

9. The method according to claim 8, wherein, the preset rule comprises: a priority of the calling party ring back tone and a priority of the called party ring back tone, wherein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

10. The method according to any one of claims 7-9, wherein, the first server responding to the call from the calling party terminal and connecting with the called party terminal comprises:
the first server responding to the call initiated by the calling party terminal through an IP multimedia subsystem, connecting with the called party terminal through the IP multimedia subsystem.

11. The method according to any one of claims 7-9, wherein, before triggering the second server to play the ring back tone for the calling party terminal, the method further comprises:
the first server determining whether to play the ring back tone; and
when determining to play the ring back tone, the first server triggering the second server to play the ring back tone for the calling party terminal.

12. The method according to claim 11, wherein, the first server determining whether to play the ring back tone comprises:
the first server receiving a first message transmitted by the called party terminal, wherein, the first message is arranged to indicate a state of the called party terminal; and
when the first message indicates that the called party terminal is in an idle state, the first server determining to play the ring back tone.

13. The method according to any one of claims 7-9, wherein, the first server triggering the second server to play the ring back tone for the calling party terminal comprises:
the first server initiating a call request to the second server, wherein, the call request carries information of the calling party terminal.

14. A device for implementing a ring back tone service, located at a first server, comprising:
a connection module arranged to respond to a call from a calling party terminal and connect with a called party terminal; and
a trigger module arranged to trigger a second server to play a ring back tone for the calling party terminal, wherein, the second server is arranged to respond to the trigger of the first server and play the ring back tone for the calling party terminal.

15. The device according to claim 14, wherein,
the device further comprises: a first determination module, further arranged to determine whether to play a calling party ring back tone or a called party ring back tone for the calling party terminal according to a preset rule, wherein, the calling party ring back tone is a ring back tone preset at the calling party terminal and the called party ring back tone is a ring back tone preset at the called party terminal; and
the trigger module is further arranged to indicate the ring back tone determined to be played when the second server is triggered to play the ring back tone for the called party terminal.

16. The device according to claim 15, wherein, the preset rule comprises: a priority of the calling party ring back tone and a priority of the called party ring back tone, wherein, when the priority of the calling party ring back tone is higher than the priority of the called party ring back tone, the calling party ring back tone is played for the calling party terminal; and when the priority of the called party ring back tone is higher than the priority of the called party ring back tone, the called party ring back tone is played for the calling party terminal.

17. The device according to any one of claims 14-16, wherein, the connection module is arranged to respond to the call initiated by the calling party terminal through an IP multimedia subsystem and connect with the called party terminal through the IP multimedia subsystem.

18. The device according to any one of claims 14-16, wherein, the device further comprises: a second determination module arranged to determine whether to play the ring back tone.

19. The device according to claim 18, wherein, the second determination module comprises:
a receiving unit arranged to receive a first message transmitted by the called party terminal, wherein, the first message is arranged to indicate a state of the called party terminal; and
a determination unit arranged to, when the first message indicates that the called party terminal is in an idle state, determine to play the ring back tone.

20. The device according to any one of claims 14-16, wherein, the trigger module is arranged to initiate a call request to the second server, wherein, the call request carries information of the calling party terminal.
